# EUROPÄISCHE PATENTSCHRIFT

(11) **EP 4 431 003 B1**
(45) Veröffentlichungstag und Bekanntmachung des Hinweises auf die Patenterteilung: **18.11.2026**
(21) Anmeldenummer: 24160254.9
(22) Anmeldetag: 28.02.2024
(51) Int. Cl.: A47L 15/00, B25J 9/00

(54) **ENTLADESYSTEM ZUM AUTOMATISCHEN ENTLADEN VON SPÜLGUT AUS SPÜLKÖRBEN ODER TRANSPORTBANDFÄCHERN, SPÜLMASCHINE MIT EINEM SOLCHEN ENTLADESYSTEM SOWIE VERFAHREN ZUM AUTOMATISCHEN ENTLADEN VON SPÜLGUT AUS SPÜLKÖRBEN ODER TRANSPORTBANDFÄCHERN**
UNLOADING SYSTEM FOR AUTOMATICALLY UNLOADING ITEMS FROM BASKETS OR CONVEYOR BELT COMPARTMENTS, DISHWASHER WITH SUCH AN UNLOADING SYSTEM AND METHOD FOR AUTOMATICALLY DISCHARGING ITEMS FROM BASKETS OR CONVEYOR BELT COMPARTMENTS
SYSTÈME DE DÉCHARGEMENT POUR DÉCHARGER AUTOMATIQUEMENT DES PRODUITS À LAVER DES PANIERS DE RINÇAGE OU DES BACS DE TRANSPORT, LAVE-VAISSELLE DOTÉ D'UN TEL SYSTÈME DE DÉCHARGEMENT ET PROCÉDÉ DE DÉCHARGEMENT AUTOMATIQUE DE PRODUITS À CUIRE OU À TRANSPORTER DES BACS DE TRANSPORT

(30) Priorität: 16.03.2023 DE 102023106649
(43) Veröffentlichungstag der Anmeldung: 18.09.2024
(73) Patentinhaber: Illinois Tool Works Inc., Glenview, IL 60025 (US)
(72) Erfinder: DISCH, Harald, Glenview, Illinois 60025 (US); SCHREMPP, Martin, Glenview, Illinois 60025 (US)
(74) Vertreter: Meissner Bolte Partnerschaft mbB

(56) Entgegenhaltungen:
- EP-B1- 2 825 086
- WO-A1-2019/059844
- WO-A1-2021/006306
- CN-U- 209 996 232
- DE-T5- 112017 004 082

## Beschreibung

Die vorliegende Erfindung betrifft allgemein das Fachgebiet des insbesondere gewerblichen Spülens.

Insbesondere betrifft die Erfindung gewerbliche Spülmaschinen, die entweder als Hauben- oder Durchschubspülmaschinen oder als Transportspülmaschinen ausgeführt sind. Die Transportspülmaschinen der hierin berücksichtigten Art können als Bandtransportspülmaschinen oder als Korbtransportspülmaschinen ausgebildet sein.

Die Druckschrift WO 2021/006306 A1 betrifft ein Entladesystem zum automatischen Entladen von in einer insbesondere gewerblichen Spülmaschine gereinigtem Spülgut aus Spülkörben oder zum automatischen Entladen von in einer insbesondere gewerblichen Spülmaschine gereinigtem Spülgut aus Transportbandfächern einer Transportvorrichtung. Das Entladesystem weist einen Roboterarmmechanismus mit mindestens einem Greifer auf, welcher ausgebildet ist, mindestens ein Spülgutteil aus einem Spülkorb oder aus einem Transportbandbandfach zu greifen. Das Entladesystem weist ferner eine Abstellvorrichtung mit einem einer ersten Spülgutart oder Spülgutsorte zugeordneten ersten Aufnahmebereich und mit mindestens einem mindestens einer zweiten Spülgutart oder Spülgutsorte zugeordneten zweiten Aufnahmebereich auf.

Ein Entladesystem nach dem Oberbegriff des Anspruchs 1 ist ferner aus der DE 11 2017 004 082 T5 bekannt.

Die WO 2019/059844 A1 betrifft eine Transportspülmaschine mit einer Abstellvorrichtung in Gestalt eines Spülgutteil-Staplers.

Die CN 209 996 232 U betrifft ebenfalls eine Transportspülmaschine.

Transportspülmaschinen finden im gewerblichen Bereich Anwendung. Im Gegensatz zu Haushaltsspülmaschinen, in welchen das zu reinigende Spülgut während der Reinigung ortsfest in der Maschine verbleibt, findet bei Transportspülmaschinen ein Transport des Spülguts durch verschiedene Behandlungszonen der Maschine statt.

Bei Transportspülmaschinen wird das Spülgut, wie beispielsweise Tabletts, Geschirr, Töpfe, Gläser, Besteck und andere zu reinigende Utensilien, durch mehrere Behandlungszonen, wie beispielsweise Vorwaschzone(n), Hauptwaschzone(n), Nachwasch- bzw. Vorspülzone(n), Klarspülzone(n) und Trocknungszone(n), gefördert.

Für den Transport von Spülgut in einer Transportrichtung durch die Transportspülmaschine kommt eine Transportvorrichtung zum Einsatz, die in der Regel mindestens eine Transportspur mit Fächern zur Aufnahme von Spülgut aufweist. Bei einer Bandtransportspülmaschine können die Fächer durch Stützfinger auf einem die Transportspur definierenden Transportband der Transportvorrichtung gebildet sein. Bei Korbtransportspülmaschinen dienen als Transportvorrichtung Spülkörbe, in denen zur Aufnahme des zu behandelnden Spülguts Fächer ausgebildet sein können. Denkbar hierbei ist es, dass die Spülkörbe mit einer Fördereinrichtung einer Transportspur durch die Korbtransportspülmaschine transportiert werden.

Üblicherweise wird das zu reinigende Spülgut vor dem Einstellen in das Transportband vorsortiert. Beispielsweise ist aus der Druckschrift US 6,530,996 B2 eine Korbtransportspülmaschine bekannt, bei welcher das zu behandelnde Spülgut vorsortiert in Spülkörben den jeweiligen Behandlungszonen zugeführt wird.

Transportspülmaschinen werden insbesondere in großen Einrichtungen, wie Mensen und Kantinen, eingesetzt, um große Mengen an verschmutztem Spülgut möglichst wirtschaftlich zu reinigen. Mit Transportspülmaschinen der derzeit bekannten Art können mehrere hundert Gedecksätze pro Stunde gereinigt werden.

Hingegen kommen üblicherweise Hauben- oder Durchschub-Spülmaschinen vor allem (aber nicht ausschließlich) bei kleineren Spülküchen, wie etwa bei kleineren Mensen, insbesondere Schul-Mensen, oder im Catering-Bereich zum Einsatz. Charakteristisch für den Einsatz derartiger Spülmaschinen ist, dass diese in Spülküchen zum Einsatz kommen, in denen in der Regel nur eine begrenzte Aufstellfläche zur Verfügung steht.

Eine als Hauben- oder Durchschub-Spülmaschine ausgebildete gewerbliche Spülmaschine unterscheidet sich von einer Haushaltsspülmaschine insbesondere dadurch, dass eine gewerbliche Spülmaschine derart konzipiert sein muss, dass - abhängig von dem gewählten Behandlungsprogramm - Programmlaufzeiten zwischen einer und fünf Minuten realisiert werden können, während Haushaltsspülmaschinen in der Regel Laufzeiten von bis zu 2,5 Stunden oder darüber haben. Aufgrund der bei gewerblichen Spülmaschinen geforderten kurzen Programmdauer sind bei Haushaltsspülmaschinen eingesetzte Techniken in der Regel nicht ohne Weiteres auf gewerbliche Spülmaschinen übertragbar.

Zum chargenweisen Beladen und Entladen der Behandlungskammer einer als Hauben- oder Durchschubspülmaschine ausgebildeten gewerblichen Spülmaschine werden die mit Spülgut beladenen Spülkörbe von einer Eingangsseite manuell in die Behandlungskammer geschoben und nach Beendigung eines Spülprogramms von einer Ausgangsseite aus der Behandlungskammer manuell entnommen. Fast ausnahmslos werden Hauben- oder Durchschubspülmaschinen mit Zu- und/oder Auslauftischen ausgeführt. Auf der Zulaufseite der Spülmaschine findet üblicherweise ein manuelles Vorabräumen und ein manuelles Vorwaschen des schmutzigen Spülguts statt. Des Weiteren erfolgt hier die Beladung des schmutzigen Spülguts in die einzelnen Spülkörbe. Die Auslaufseite dient in der Regel zur Trocknung und zur Entladung der Spülkörbe.

Insbesondere bei als Hauben-Maschinen oder Korbdurchschub-Maschinen ausgeführten Spülmaschinen ist es aus ergonomischer Hinsicht bevorzugt, dass sich die Waschebene auf gleicher Höhe wie die Zu- und Auslauftische befindet. Auf diese Weise können die zu reinigenden Spülkörbe einfach und ergonomisch vom Zulauftisch in die Spülmaschine und nach beendeter Reinigung aus der Spülmaschine auf den Auslauftisch geschoben werden.

Unter dem hierin verwendeten Begriff "Waschebene" ist die horizontale Ebene zu verstehen, in welcher der Spülkorb aufliegt.

In der Behandlungskammer einer als Hauben- oder Durchschub-Spülmaschine ausgeführten gewerblichen Spülmaschine wird die Waschebene in der Regel durch ein Führungssystem, insbesondere Führungsschienen, festgelegt, mit dem ein von einem an der Einlaufseite der Maschine vorgesehenen Zulauftisch in die in die Behandlungskammer geschobener Spülkorb aufgenommen wird. Auf diese Weise können die zu reinigenden Spülkörbe vom Zulauftisch in die Hauben-Spülmaschine und nach beendeter Reinigung aus der Hauben-Spülmaschine auf den Auslauftisch geschoben werden.

Dieses Be- und Entladen der Hauben- oder Durchschubspülmaschinen erfolgt nach derzeitigem Stand der Technik manuell, d.h. nach der Vorabräumung auf der Zulaufseite schiebt der Bediener den zu reinigenden Spülkorb manuell vom Zulauftisch in die Behandlungskammer der Spülmaschine und nachdem der Reinigungszyklus in der Spülmaschine beendet ist, schiebt der Bediener den gereinigten Spülkorb aus der Maschine auf den Auslauftisch der Auslaufseite.

Da insbesondere Hauben- oder Durchschub-Spülmaschinen ausgelegt sind, große Mengen an Spülgut in möglichst kurzer Zeit zu reinigen, muss der Bediener der Spülmaschine bei maximaler Auslastung diese sehr häufig manuell be- und entladen. So beträgt bei einer typischen Hauben-Spülmaschine der Firma HOBART die Dauer des voreingestellten Standardprogramms, welches üblicherweise für normal verschmutztes Spülgut, wie Teller, Schalen, Tassen und Gläser, verwendet wird, nur 70 Sekunden, d.h. die theoretische Kapazität der Spülmaschine beträgt bis zu 52 Spülkörbe pro Stunde. Das bedeutet, dass der Bediener der Spülmaschine bei maximaler Auslastung bis zu 52-mal pro Stunde manuell be- und entladen muss. Ferner bedeutet dies für den Bediener zusätzlichen Arbeitsaufwand, da er in dieser Zeit beispielsweise kein weiteres schmutziges Spülgut bei der Zulaufseite der Spülmaschine vorabräumen kann oder beispielsweise kein bereits gereinigtes Spülgut bei der Auslaufseite der Spülmaschine zur weiteren Verwendung verräumt werden kann.

Außerdem ist es für den Bediener schwierig, die maximal mögliche Kapazität der Spülmaschine voll auszuschöpfen, da er hierzu stets aufpassen muss, ob bzw. wann das Spülprogramm fertig ist, damit er direkt im Anschluss daran den gerade gereinigten Spülkorb entnehmen und die Maschine dann mit dem nächsten zu reinigenden Spülkorb wieder beladen kann.

Aber auch bei Transportspülmaschinen, wie beispielsweise Bandtransportspülmaschinen oder Korbtransportspülmaschinen, stellt die Be- und insbesondere Entladung mit Spülgut eine hohe Belastung für das Spülpersonal dar. Dabei ist es derzeit üblich, die Spülgutteile vor dem Einstellen in das Transportband vorsortiert und sortenrein aufzustapeln. Zur Beladung in das Transportband wird der Teller-, Schalen- oder Tablettstapel von Zeit zu Zeit wieder abgestapelt und manuell in die Transportbandfächer sortenrein eingestellt. Dieses sortenreine Vorgehen hat für den Maschinenbediener sowohl im Belade- als auch im Entladebereich der Transportspülmaschine Vorteile.

Die Vorteile im Beladungsbereich sind insbesondere durch ein ergonomisches Vorgehen, durch Reduzierung von Körperdrehungen und Körperbewegungen durch mehrmaliges Wiederholen von gleichen Bewegungen gegeben. Die Vorteile im Entladebereich bestehen dagegen darin, dass mehr als ein Spülgutteil bei einer Bewegung mitabgenommen werden kann, wodurch ein ergonomisches Vorgehen, eine Reduzierung von Körperdrehungen und Körperbewegungen durch mehrmaliges Wiederholen von gleichen Bewegungen möglich ist.

Durch den üblicherweise kontinuierlichen Betrieb einer Transportspülmaschine ist es allerdings unumgänglich, dass sowohl beim Beladebereich als auch beim Entladebereich der Transportspülmaschine mindestens eine Person permanent die Spülgutteile manuell in die Transportbandfächer vorzugsweise sortenrein einstellt, während eine andere Person beim Entladebereich der Transportspülmaschine die dann gereinigten Spülgutteile abnimmt.

Bei einer Maschinenkapazität von mehreren tausend Tellern pro Stunde muss insbesondere möglichst schnell und effizient gearbeitet werden, wodurch die körperliche Belastung des Bedienpersonals steigt.

Auf Grundlage dieser Problemstellung liegt der vorliegenden Erfindung die Aufgabe zu Grunde, eine Lösung für Haubenspülmaschinen oder Transportspülmaschinen der zuvor diskutierten Art anzugeben, bei welcher es möglich ist, den gesamten Wasch- und Spülprozess effizienter zu gestalten, wodurch insbesondere die Arbeitszeit des Spülpersonals gekürzt und der Ressourcenverbrauch der Spülmaschine reduziert werden kann.

Diese Aufgabe wird erfindungsgemäß durch ein Entladesystem gemäß dem unabhängigen Patentanspruch 1 gelöst, wobei vorteilhafte Weiterbildungen des erfindungsgemäßen Entladesystems in den abhängigen Ansprüchen 2 bis 4 angegeben sind.

Demgemäß betrifft die Erfindung ein Entladesystem zum automatischen Entladen von in einer insbesondere gewerblichen Spülmaschine gereinigtem Spülgut aus Spülkörben oder zum automatischen Entladen von in einer insbesondere gewerblichen Spülmaschine gereinigtem Spülgut aus Transportbandfächern einer Transportvorrichtung, wobei das Entladesystem einen Roboterarmmechanismus mit mindestens einem Greifer aufweist, welcher ausgebildet ist, mindestens ein Spülgutteil aus einem Spülkorb oder aus einem Transportbandfach zu greifen.

Das erfindungsgemäße Entladesystem weist ferner eine Abstellvorrichtung mit einem einer ersten Spülgutart oder Spülgutsorte zugeordneten ersten Aufnahmebereich und mit mindestens einem mindestens einer zweiten Spülgutart oder Spülgutsorte zugeordneten zweiten Aufnahmebereich auf.

Erfindungsgemäß ist vorgesehen, dass der Roboterarmmechanismus ausgebildet ist, das mit dem Greifer gegriffene mindestens eine Spülgutteil zu einem Übergabebereich zu transportieren, wobei gleichzeitig die Abstellvorrichtung ausgebildet ist, abhängig von der Spülgutart oder Spülgutsorte des mit dem Greifer gegriffenen mindestens einen Spülgutteils entweder den ersten Aufnahmebereich oder den mindestens einen zweiten Aufnahmebereich derart in den Übergabebereich zu bewegen, dass das mit dem Greifer gegriffene mindestens eine Spülgutteil in den entsprechenden Aufnahmebereich der Abstellvorrichtung ablegbar ist.

Die mit der Erfindung erzielbaren Vorteile liegen auf der Hand: durch den Einsatz eines Roboterarmmechanismus mit einem entsprechenden Greifer kann in einer automatisierten Weise das gereinigte Spülgut entladen werden. Auf diese Weise wird der Aufwand an Personaleinsatz an der Spülmaschine reduziert.

Darüber hinaus ermöglicht es das erfindungsgemäße Entladesystem, dass die mit dem Roboterarmmechanismus entladenen Spülgutteile vorzugsweise sortenrein sortiert werden.

Die erfindungsgemäße Lösung zeichnet sich insbesondere dadurch aus, dass das Entladesystem auch bei hohem Durchsatz der Spülmaschine wirkungsvoll arbeitet. In der Tat gestaltet sich in vielen Fällen eine mit Hilfe eines Roboterarmmechanismus realisierte Automatisierung und Sortierung der gereinigten Spülgutteile technisch schwierig. So müssen für eine automatisierte Aufnahme der Spülgutteile, insbesondere bei hohem Durchsatz der Spülmaschine, hohe Bewegungsgeschwindigkeiten des Roboterarms eingesetzt werden, welche mit hohen Beschleunigungen verbunden sind. Diese hohen Beschleunigungen würden jedoch den Roboterarmmechanismus an die Grenzen der mechanischen Belastbarkeit führen, was in der Regel mit einer stabilen und daher sehr massiven Rahmenkonstruktion abgefangen werden müsste. Zudem wären in diesem Fall auch die einzelnen Spülgutteile hohen Kräften unterworfen, was die Gefahr einer Beschädigung der Spülgutteile bedingt.

Aus diesem Grund ist erfindungsgemäß vorgesehen, dass nach dem Aufnehmen eines Spülgutteils mit Hilfe des mindestens einen Greifers der Roboterarmmechanismus vorzugsweise in einer Drehbewegung immer die gleiche Abladeposition anfährt, die in dem Übergabebereich liegt. Auf diese Weise können die mit dem Roboterarmmechanismus umzusetzenden Verfahrwege möglich gering gehalten werden, infolgedessen eine schnellere Taktzeit zum Entladen der Spülkörbe bzw. Transportbandfächer realisierbar ist.

Dabei ist vorgesehen, dass die Funktion der vorzugsweise sortenreinen Sortierung des Spülguts von der Abstellvorrichtung umgesetzt wird. Hierzu ist vorgesehen, dass die Abstellvorrichtung automatisch den Aufnahmebereich der Abstellvorrichtung in den Übergabebereich bewegt, welcher der Spülgutart oder Spülgutsorte des mit dem Greifer gegriffenen Spülgutteils zugeordnet ist. Der Greifer legt dann
- nachdem er das gegriffene Spülgutteil in den Übergabebereich transportiert hat
- das Spülgutteil stets in dem "richtigen" Aufnahmebereich der Abstellvorrichtung ab.

Bei dem erfindungsgemäßen Entladesystem ist vorgesehen, dass dieses eine insbesondere berührungslos arbeitende Spülgut-Detektionsvorrichtung aufweist, welche ausgebildet ist, ein mit dem Greifer des Roboterarmmechanismus zu greifendes Spülgutteil zu erfassen, und welche ferner ausgebildet ist, die Spülgutart oder Spülgutsorte des mit dem Greifer des Roboterarmmechanismus zu greifenden Spülgutteils und/oder die Spülgutart oder Spülgutsorte des mit dem Greifer des Roboterarmmechanismus gegriffenen Spülgutteils zu erfassen.

Denkbar in diesem Zusammenhang wäre es aber auch, dass die Spülgut-Detektionsvorrichtung lediglich dazu dient, den Roboterarmmechanismus mit dem Greifer entsprechend zu positionieren, dass ein Spülgutteil aus dem Spülkorb oder aus dem Transportbandfach mit Hilfe des Greifers gegriffenen werden kann, wobei anschließend der Roboterarmmechanismus automatisch, d.h. ohne Sensorunterstützung, den Greifer mit dem gegriffenen Spülgutteil zu dem Übergabebereich bewegt. Diese Lösung bietet sich beispielsweise dann an, wenn das Spülgut bereits sortenrein in den Spülkörben oder Transportbandfächern aufgenommen ist.

Zum Erfassen eines mit dem Greifer des Roboterarmmechanismus zu greifenden Spülgutteils kommt vorzugsweise ein Kamerasystem zum Einsatz. Denkbar sind aber auch andere insbesondere optische Detektionsvorrichtungen, wie beispielsweise Lichtvorhänge oder Laserscanner.

Um die Spülgutart oder Spülgutsorte des mit dem Greifer des Roboterarmmechanismus gegriffenen Spülgutteils zu erfassen, können beispielsweise Sensoren im Greifer des Roboterarmmechanismus zum Einsatz kommen, welche das Gewicht oder die Größe des Spülgutteils erfassen und indirekt dann darüber einen Rückschluss auf die Spülgutart oder Spülgutsorte des mit dem Greifer gegriffenen Spülgutteils treffen.

Erfindungsgemäß ist vorgesehen, dass das Entladesystem eine Steuereinrichtung aufweist, welche ausgebildet ist, den Roboterarmmechanismus mit dem Greifer derart anzusteuern, dass mit dem Greifer das von der Spülgut-Detektionsvorrichtung erfasste Spülgutteil gegriffen wird.

Die Steuereinrichtung ist ferner ausgebildet, abhängig von der erfassten Spülgutart oder Spülgutsorte die Abstellvorrichtung derart anzusteuern, dass der der erfassten Spülgutart oder Spülgutsorte entsprechend zugeordnete Aufnahmebereich der Abstellvorrichtung in den Übergabebereich bewegt wird oder in dem Übergabebereich vorliegt.

Für die Abstellvorrichtung kommen unterschiedliche Ausführungsvarianten in Frage.

Gemäß einer ersten (nicht beanspruchten) Ausführungsvariante ist die Abstellvorrichtung als Spülgutteil-Stapler ausgeführt, welcher eine um eine vertikale Drehachse drehbar gelagerte und insbesondere als Revolversystem ausgeführte Spülgutaufnahme mit einem ersten sich zumindest im Wesentlichen parallel zu der vertikalen Drehachse erstreckenden Magazinschacht und mit mindestens einem zweiten sich zumindest im Wesentlichen parallel zu der vertikalen Drehachse erstreckenden Magazinschacht aufweist. Der erste Magazinschacht entspricht dabei dem ersten Aufnahmebereich und der mindestens eine zweite Magazinschacht dem mindestens einen zweiten Aufnahmebereich.

Gemäß Realisierungen dieser Ausführungsvariante ist vorgesehen, dass die um die vertikale Drehachse drehbar gelagerte Spülgutaufnahme insgesamt mindestens drei Magazinschächte und vorzugsweise mindestens vier Magazinschächte aufweist, welche sich jeweils zumindest im Wesentlichen parallel zu der vertikalen Drehachse erstrecken, und welche jeweils ausgeführt sind, insbesondere stapelnd jeweils eine dem Magazinschacht entsprechend zugeordnete Spülgutart oder Spülgutsorte aufzunehmen.

Vorzugsweise sind dabei die Magazinschächte der um die vertikale Drehachse drehbar gelagerten Spülgutaufnahme in einer zueinander äquidistanten Weise angeordnet.

Gemäß einer (ebenfalls nicht beanspruchten) alternativen Ausführungsvariante der Abstellvorrichtung ist diese als Spülgutteil-Stapler ausgeführt, welcher eine als Linearsystem ausgeführte Spülgutaufnahme mit einem ersten sich zumindest im Wesentlichen in vertikaler Richtung erstreckenden Magazinschacht und mit mindestens einem zweiten sich zumindest im Wesentlichen in vertikaler Richtung erstreckenden Magazinschacht aufweist, wobei der erste Magazinschacht dem ersten Aufnahmebereich und der mindestens eine zweite Magazinschacht dem mindestens einen zweiten Aufnahmebereich entspricht.

Dabei ist insbesondere vorgesehen, dass bedarfsweise der erste Magazinschacht oder der mindestens eine zweite Magazinschacht derart bewegbar und vorzugweise linear bewegbar ist, dass eine Eingabeöffnung des entsprechenden Magazinschachts in dem Übergabebereich vorliegt.

Losgelöst von der speziellen Ausführungsvariante der Abstellvorrichtung ist es bevorzugt, dass jeder Magazinschacht einen in einer Längserstreckungsachse des Magazinschachts bewegbaren Grundträger aufweist, welcher insbesondere mit Hilfe eines Federmechanismus in Richtung einer oberen Eingabeöffnung des Magazinschachts derart vorgespannt ist, dass der Grundträger durch das Gewicht der von dem Magazinschacht aufgenommenen Spülgutteile heruntergedrückt wird, so dass sich im Bereich der Eingangsöffnung des Magazinschachts immer das zuletzt in den Magazinschacht mit Hilfe des Greifers gesetzte Spülgutteil befindet.

Auf diese Weise ist sichergestellt, dass der Übergabebereich mit dem Bereich der Eingabeöffnung des entsprechenden Magazinschachts übereinstimmt.

Gemäß der Erfindung weist die Abstellvorrichtung eine als Linearsystem ausgeführte Spülgutaufnahme mit einem ersten als Schublade ausgeführten Fach und mit mindestens einem zweiten als Schublade ausgeführten Fach auf, wobei das erste Fach dem ersten Aufnahmebereich und das mindestens eine zweite Fach dem mindestens einen zweiten Aufnahmebereich entspricht. Dabei ist vorgesehen, dass das erste Fach oder das mindestens eine zweite Fach bedarfsweise derart linear bewegbar ist, dass eine Eingabeöffnung des entsprechenden Fachs in dem Übergabebereich vorliegt.

Das erfindungsgemäße Entladesystem eignet sich insbesondere dazu, Teller, Tassen, Schalen oder Gläser, insbesondere Trinkgläser zu entladen und diese sortenrein in einer gestapelten Weise zu sortieren. Insofern sind unter dem Begriff "Spülgutart oder Spülgutsorte" insbesondere Trinkgläser oder Schälchen oder Tassen oder Teller oder Untertassen oder Tabletts oder Besteck zu verstehen.

Wie bereits eingangs ausgeführt, zeichnet sich das erfindungsgemäße Entladesystem insbesondere auch dadurch aus, dass dieses nicht notwendigerweise mit einer stabilen und insbesondere massiven Rahmenkonstruktion ausgestattet sein muss. Insofern bietet es sich an, dass zumindest die Abstellvorrichtung als ein mobiles System ausgeführt ist und bedarfsweise insbesondere manuell zu einem Entladebereich der Spülmaschine bewegt werden kann.

Im Hinblick auf den Roboterarmmechanismus ist gemäß Ausführungsvarianten vorgesehen, dass dieser einen Revolverkopf zur Halterung von unterschiedlichen Greifern aufweist. Alternativ oder zusätzlich hierzu ist es denkbar, dass der Roboterarmmechanismus ausgebildet ist, unterschiedliche Greifer zu tragen. Die Greifer können beispielsweise mit Hilfe eines Schnellwechselsystems an einer entsprechenden Schnittstelle des Roboterarmmechanismus befestigt werden.

Auf diese Weise ist es grundsätzlich möglich, dass der Roboterarmmechanismus bzw. der von dem Roboterarmmechanismus getragene Greifer über einen weiten Bereich unterschiedliche Spülgutarten oder Sorten manipulieren kann.

Gemäß einer Realisierung des Entladesystems ist dieses ausgebildet, automatisch in einer insbesondere gewerblichen Spülmaschine gereinigtes Spülgut aus Spülkörben zu entladen. Diese Spülkörbe können beispielsweise zuvor die Behandlungszonen einer Korbtransportspülmaschine oder die Behandlungskammer einer Haubenspülmaschine passiert haben.

Bei dieser Ausführungsform kann das Entladesystem eine Spülkorbspeichervorrichtung aufweisen, um leere Spülkörbe und/oder vorzugsweise zumindest teilweise entladene Spülkörbe zwischenzuspeichern.

In diesem Zusammenhang bietet es sich an, dass das Entladesystem eine Transfervorrichtung aufweist, welche ausgebildet ist, von einem Entladebereich der Spülmaschine Spülkörbe der Spülkorbspeichervorrichtung zuzuführen.

Die Erfindung betrifft ferner eine Spülmaschine, welche als

Transportspülmaschine, wie beispielsweise Bandtransportspülmaschine oder Korbtransportspülmaschine, oder als Haubenspülmaschine ausgeführt ist und einen Entladebereich sowie ein Entladesystem im oder beim Entladebereich aufweist. Dabei handelt es sich bei dem Entladesystem um eine Entladesystem der zuvor beschriebenen erfindungsgemäßen Art.

Insbesondere ist das Entladesystem dabei insgesamt als ein modulares System ausgeführt.

Die Erfindung betrifft ferner ein Verfahren zum automatischen Entladen von in einer insbesondere gewerblichen Spülmaschine gereinigtem Spülgut aus Spülkörben oder zum automatischen Entladen von in einer insbesondere gewerblichen Spülmaschine gereinigtem Spülgut aus Transportbandfächern einer Transportvorrichtung. Bei dem erfindungsgemäßen Verfahren wird zunächst ein Entladesystem der zuvor genannten erfindungsgemäßen Art bereitgestellt.

Anschließend wird mit Hilfe des mindestens einen Greifers des Roboterarmmechanismus mindestens ein Spülgutteil gegriffen und zu dem Übergabebereich transportiert. Dort wird das Spülgutteil in einen entsprechenden Aufnahmebereich der Abstellvorrichtung abgelegt.

Nachfolgend werden unter Bezugnahme auf die beiliegenden Zeichnungen exemplarische Ausführungsformen näher beschrieben Die Ausführungsformen der Figuren fallen nicht unter den Gegenstand des Schutzbegehrens und dienen nur zum Verständnis der Erfindung.

Es zeigen:
- FIG. 1: schematisch eine als Hauben-Spülmaschine ausgeführte gewerbliche Spülmaschine gemäß einer ersten Ausführungsform;
- FIG. 2: schematisch eine zweite exemplarische Ausführungsform;
- FIG. 3: schematisch eine Draufsicht auf die Ausführungsform gemäß FIG. 2;
- FIG. 4: schematisch eine weitere exemplarische Ausführungsform; und
- FIG. 5: schematisch eine weitere exemplarische Ausführungsform.

Eine als Hauben-Spülmaschine ausgeführte Spülmaschine 20 weist für gewöhnlich eine Programmsteuereinrichtung (hierin auch als "Steuereinrichtung" bezeichnet) auf zur Steuerung von mindestens einem Reinigungsprogramm und eine durch mindestens eine Tür und/oder mindestens eine Haube 24 verschließbare Behandlungskammer 21 in einem Maschinengehäuse zur Aufnahme von zu reinigendem Spülgut 3, wie beispielsweise Geschirr, Besteck, Töpfe, Pfannen, Tabletts und Gläser.

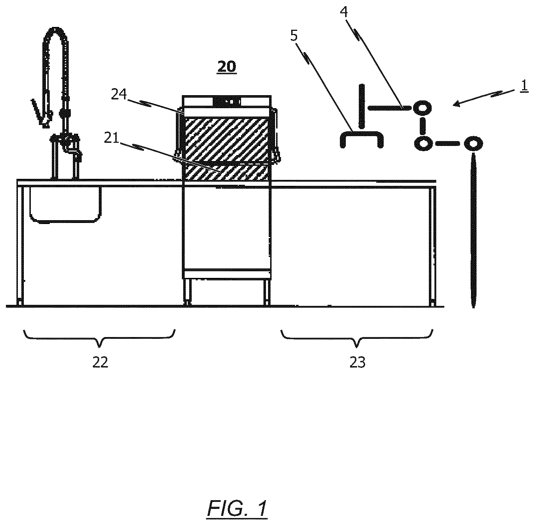

Wie es insbesondere der Darstellung in FIG. 1 entnommen werden kann, ist es in ergonomischer Hinsicht von Vorteil, wenn eine als Durchschub-Spülmaschine ausgeführte Spülmaschine 20 an ihrer Zu- und Auslaufseite 22, 23 jeweils mit einem Tisch (Zulauftisch, Auslauftisch) ausgestattet ist. Die mit schmutzigem Spülgut 3 beladenen Spülkörbe 2 können somit auf den Auslauftisch in die Spülmaschine 20 geschoben werden. Nach der Behandlung des Spülguts 3 in der Behandlungskammer 21 der Spülmaschine 20 wird der Spülkorb 2 mit dem dann gereinigten Spülgut 3 aus der Maschine 20 auf den Auslauftisch gefahren.

Die Einwirkzeit, d.h. die Zeit, während der Reinigungs- oder Waschflüssigkeit das Spülgut 3 innerhalb der Behandlungskammer 21 benetzt, hängt insbesondere von der über das Behandlungsprogramm festgelegten Dauer der Waschphase ab. Für normal verschmutztes Spülgut 3, wie Teller, Schalen, Tassen und/oder Gläser, erfordert ein Reinigungszyklus bestehend aus einer Waschphase und einer danach anschließenden Klarspülphase in der Regel zwischen 50 bis 100 Sekunden.

Allerdings kann eine längere Behandlung des Spülguts 3 notwendig sein, insbesondere wenn dieses einen höheren Verschmutzungsgrad aufweist, oder wenn Schmutz in das Spülgut 3 eingebrannt ist. Häufig ist dann eine Verlängerung der Gesamt-Behandlungszeit auf bis zu 400 Sekunden erforderlich. Durch die verlängerte Einwirkzeit wird das zu reinigende Spülgut 3 einer Intensiv-Behandlung unterzogen, so dass auch stärker verschmutztes Spülgut 3 wirksam gereinigt werden kann.

Obgleich in FIG. 1 als exemplarische Ausführungsform der Spülmaschine 20 eine Hauben-Spülmaschine gezeigt ist, ist die vorliegende Erfindung nicht auf diesen Maschinentyp beschränkt.

Vielmehr umfasst die Erfindung auch Transportspülmaschinen, insbesondere Korb-Transportspülmaschinen oder Bandtransportspülmaschinen.

Bei Korb-Transportspülmaschinen wird das in einen Spülkorb 2 gesetzte vorzugsweise sortenrein gesetzte schmutzige Spülgut 3 mit Hilfe einer Transportvorrichtung durch die einzelnen Behandlungszonen 21 der Transportspülmaschine transportiert. Bei diesen Behandlungszonen 21 handelt es sich beispielsweise um mindestens eine Vorwaschzone, mindestens eine Hauptwaschzone, mindestens eine Nachwasch- bzw. Vorspülzone, mindestens eine Klarspülzone und mindestens eine Trocknungszone.

Nach der Behandlung des Spülguts 3 in den entsprechenden Behandlungszonen 21 werden anschließend an der Auslaufseite 23 der Transportspülmaschine die Spülkörbe 2 mit dem gereinigten Spülgut 3 ausgegeben.

Bei Bandtransportspülmaschinen kommt eine Transportvorrichtung zum Einsatz, die in der Regel Fächer zur Aufnahme von Spülgut 3 aufweist. Bei einer Bandtransportspülmaschine können die Fächer insbesondere durch Stützfinger auf einem Transportband der Transportvorrichtung gebildet sein. Mittels dieses Transportbands werden alle in der Spülmaschine 20 zu reinigenden Spülgutteile 3 durch die jeweiligen Zonen der Spülmaschine 20 befördert.

Zurückkommend auf die in FIG. 1 schematisch gezeigte Haubenspülmaschine ist es grundsätzlich denkbar, dass der Spülkorb 2 mit dem schmutzigen Spülgut 3 manuell von dem Zulauftisch bei dem Zulaufbereich 22 in die Spülmaschine 20 geschoben wird.

Ebenfalls ist es denkbar, dass manuell nach der Reinigung des Spülguts 3 in der Behandlungskammer 21 der Spülmaschine 20 der Spülkorb 2 mit dem dann gereinigten Spülgut 3 aus der Maschine 20 auf den Auslauftisch im Auslaufbereich 23 gefahren wird.

Um diesen Prozess weiter zu automatisieren, ist es grundsätzlich von Vorteil, dass die insbesondere als Hauben-Spülmaschine 20 ausgeführte Spülmaschine 20 eine Be-/Entladevorrichtung aufweist, welche ausgebildet ist, vorzugsweise wahlweise automatisch die Behandlungskammer 21 der Hauben-Spülmaschine mit Spülgut 3 zu beladen und/oder vorzugsweise wahlweise automatisch das Spülgut 3 aus der Behandlungskammer 21 zu entladen.

Die Be-/Entladevorrichtung kann beispielsweise eine entsprechende Transporteinrichtung aufweisen, um das insbesondere in Spülkörbe 2 gesetzte Spülgut 3 aus dem Zulaufbereich 22 der Spülmaschine 20 in die Behandlungskammer 21 und anschließend aus der Behandlungskammer 21 zu dem Auslaufbereich 23 der Spülmaschine 20 zu transportieren.

Im Hinblick auf eine weitere Automatisierung des Gesamtprozesses besteht ein weiterer Automatisierungsschritt darin, das saubere Spülgut 3 auf der Auslaufseite 23 automatisch aus den Spülkörben 2 zu entladen und vorzugsweise sortenrein abzulegen.

Dabei liegt der Erfindung die Tatsache zu Grunde, dass Hauben-Spülmaschinen und Transportspülmaschinen, insbesondere Korbtransportspülmaschinen, darauf ausgelegt sind, große Mengen an Spülgut 3 in möglichst kurzer Zeit zu reinigen. Dies bedeutet, dass das Bedienpersonal aktuell einen sehr hohen Arbeitsaufwand zum Entladen der gespülten Spülkörbe 2 hat.

Hierzu kommt, dass speziell bei Hauben-Spülmaschinen, aber auch bei kleineren Korb-Transportspülmaschinen oft nur eine einzige Person den gesamten Spülprozess übernimmt. In diesem Fall muss die Person dann aktuell ständig zwischen der Unreinseite und der Reinseite der Spülmaschine 20 wechseln, um immer abwechselnd schmutziges Spülgut 3 in die Maschine 20 zu laden und dann wieder das saubere Spülgut 3 aus den Körben 2 zu entladen.

Dieser Wechsel verursacht zum einen zusätzlichen Arbeitsaufwand aufgrund der Laufwege zwischen Zulauf- und Auslaufseite 23 der Spülmaschine 20 und zum anderen auch immer ein gewisses Hygienerisiko wegen des Wechsels zwischen der Unreinseite und der Reinseite der Spülmaschine 20, welchem theoretisch mit zusätzlichem Zeitaufwand für die Reinigung der Hände zwischen jedem Wechsel von Unreinseite zur Reinseite begegnet werden muss.

Somit liegt der Erfindung insbesondere auch die Aufgabe zu Grunde, auf der Auslaufseite 23 der Spülmaschine 20 das saubere Spülgut 3 automatisch aus den Spülkörben 2 zu entladen und idealerweise sortenrein aufzustapeln, damit das saubere Spülgut 3 in Form von Spülgutstapeln auf der Auslaufseite 23 platzsparend zwischengelagert werden kann, um es dann zeitsparend ohne weiteren Arbeitsaufwand direkt zum finalen Lagerort oder zum Ort der Wiederverwendung transportieren zu können.

Zum automatischen Entladen von in der Spülmaschine 20 gereinigtem Spülgut 3 aus Spülkörben 2 kommt erfindungsgemäß ein Entladesystem 1 zum Einsatz.

Das Entladesystem 1 weist einen Roboterarmmechanismus 4 mit mindestens einem Greifer 5 auf, welcher ausgebildet ist, ein Spülgutteil 3 aus dem Spülkorb 2 zu greifen.

Das Entladesystem 1 weist ferner eine Abstellvorrichtung 6 auf. Die Abstellvorrichtung 6 weist verschiedene Aufnahmebereiche 7, 8 auf, in denen das mit dem Roboterarmmechanismus 4 aus dem Spülkorb 2 entnommene Spülgut 3 vorzugsweise sortenrein stapelbar ist.

Der Roboterarmmechanismus 4 ist ausgebildet, das mit dem Greifer 5 gegriffene Spülgutteil 3 in einen oder zu einem Übergabebereich 9 zu transportieren.

Andererseits ist die Abstellvorrichtung 6 ausgebildet, abhängig von der Spülgutart oder Spülgutsorte des mit dem Greifer 5 gegriffenen Spülgutteils 3 den entsprechenden Aufnahmebereich 7, 8 der Abstellvorrichtung 6 in den Übergabebereich 9 zu bewegen, so dass das mit dem Greifer 5 gegriffene Spülgutteil 3 in den entsprechend zugeordneten Aufnahmebereich 7, 8 der Abstellvorrichtung 6 ablegbar ist.

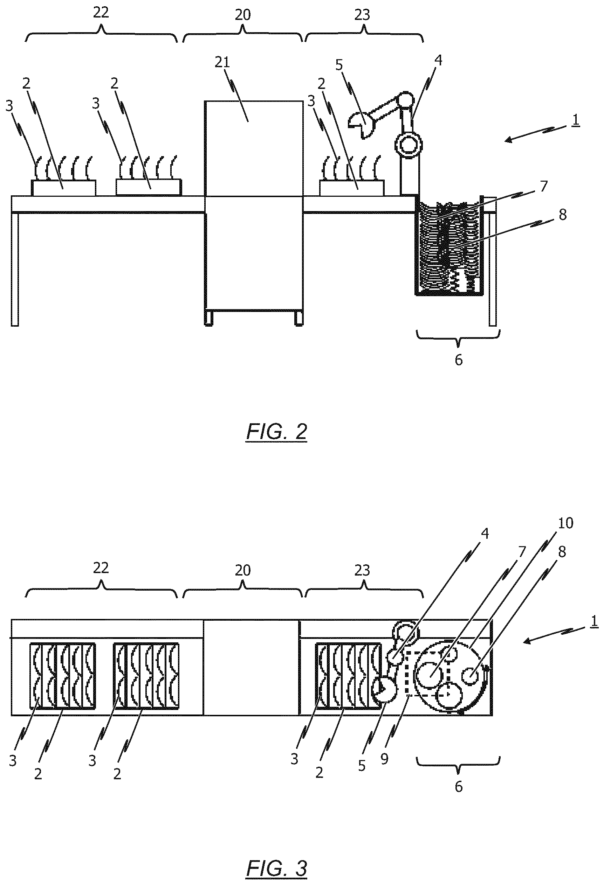

Wie es insbesondere FIG. 2 und FIG. 3 entnommen werden kann, ist die Abstellvorrichtung 6 beispielsweise als Spülgutteil 3-Stapler ausgeführt, welcher eine um eine vertikale Drehachse drehbar gelagerte und insbesondere als Revolversystem ausgeführte Spülgutaufnahme 10 mit einem ersten sich zumindest im Wesentlichen parallel zu der vertikalen Drehachse erstreckenden Magazinschacht und mit mindestens einem zweiten sich zumindest im Wesentlichen parallel zu der vertikalen Drehachse erstreckenden Magazinschacht aufweist.

Der erste Magazinschacht entspricht dabei dem ersten Aufnahmebereich 7 der Abstellvorrichtung 6, während der mindestens eine weitere, zweite Magazinschacht dem mindestens einen zweiten Aufnahmebereich 8 entspricht. Insbesondere ist bei der in FIG. 2 und FIG. 3 gezeigten Ausführungsform vorgesehen, dass die als Revolversystem ausgeführte Spülgutaufnahme 10 insgesamt vier Magazinschächte aufweist, welche sich jeweils zumindest im Wesentlichen parallel zu der vertikalen Drehachse der als Revolversystem ausgeführten Spülgutaufnahme 10 erstrecken. Jeder einzelne Magazinschacht ist ausgeführt, insbesondere stapelnd jeweils eine dem Magazinschacht entsprechend zugeordnete Spülgutart oder Spülgutsorte des Spülguts 3 aufzunehmen.

Der Draufsicht in FIG. 3 ist zu entnehmen, dass die Magazinschächte der um die vertikale Drehachse drehbar gelagerten Spülgutaufnahme 10 in einer zueinander äquidistanten Weise angeordnet sind.

Nach der Erfindung kommt jedoch nicht eine als Revolversystem ausgeführte Spülgutaufnahme 10 zum Einsatz, wie die in FIG. 2 und FIG. 3 gezeigte Ausführungsform. Denkbar und auch nicht Teil der Erfindung ist es beispielsweise, dass die Abstellvorrichtung 6 eine als Linearsystem ausgeführte Spülgutaufnahme 10 mit mehreren Magazinschächten aufweist, die derart bewegbar und vorzugsweise linear bewegbar sind, dass eine Eingabeöffnung des entsprechenden Magazinschachts bedarfsweise in dem Übergabebereich 9 vorliegt.

Nach der Erfindung weist die Abstellvorrichtung 6 eine als Linearsystem ausgeführte Spülgutaufnahme 10 mit mehreren als Schubladen ausgeführte Fächer auf, die bedarfsweise in den Übergabebereich 9 bewegbar sind.

Für die in FIG. 2 und FIG. 3 gezeigte Ausführungsvariante, bei welcher die Abstellvorrichtung 6 eine als Revolversystem ausgeführte Spülgutaufnahme 10 mit mehreren Magazinschächten aufweist, bietet es sich an, dass jedem Magazinschacht einen in einer Längserstreckungsachse des Magazinschachts bewegbaren Grundträger aufweist, welcher insbesondere mit Hilfe eines Federmechanismus in Richtung einer oberen Eingabeöffnung des Magazinschachts derart vorgespannt ist, dass der Grundträger durch das Gewicht der von dem Magazinschacht aufgenommenen Spülgutteile 3 heruntergedrückt wird, so dass sich im Bereich der Eingabeöffnung des Magazinschachts immer das zuletzt in den Magazinschacht mit Hilfe des Greifers gesetzte Spülgutteil 3 befindet.

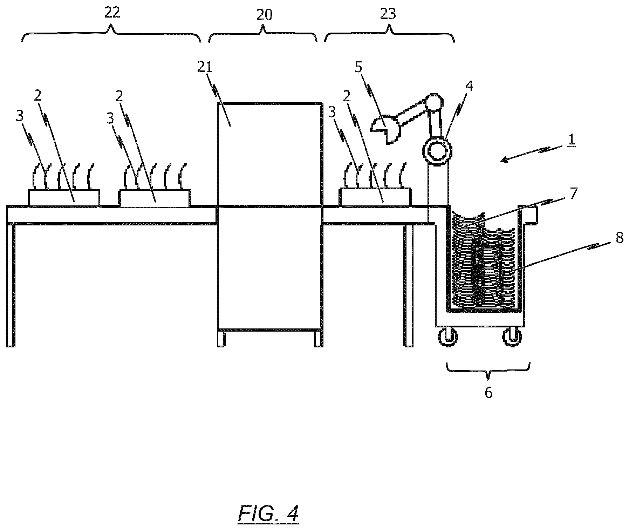

Die in FIG. 4 schematisch gezeigte Ausführungsvariante der Spülmaschine 20 bzw. des Entladesystems 1 unterscheidet sich von der in FIG. 2 gezeigten Ausführungsvariante insbesondere dadurch, dass bei der in FIG. 4 gezeigten Ausführungsvariante insbesondere die Abstellvorrichtung 6 als ein mobiles System ausgeführt ist, welches bedarfsweise insbesondere manuell zu dem Entladebereich 23 der Spülmaschine 20 bewegt werden kann.

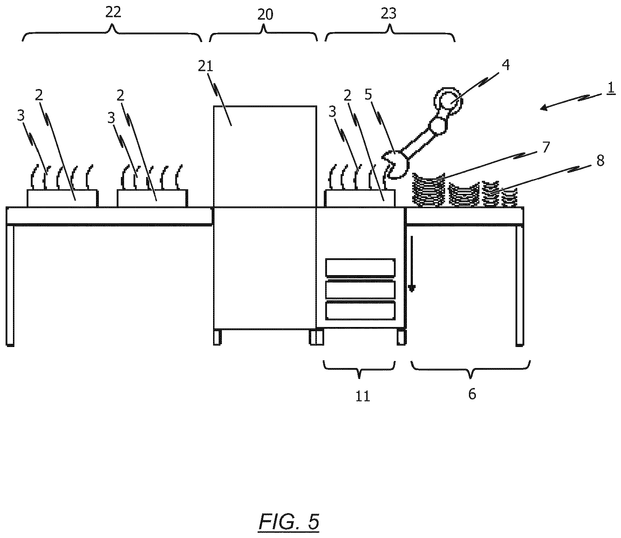

Es ist grundsätzlich denkbar, dass das Entladesystem 1 ausgebildet ist, automatisch in einer insbesondere gewerblichen Spülmaschine 20 gereinigtes Spülgut 3 aus Spülkörben 2 zu entladen, wobei - wie in FIG. 5 angedeutet - das Entladesystem 1 eine Spülkorbspeichervorrichtung 11 aufweist zum Zwischenspeichern von leeren Spülkörben 2 und/oder zum Zwischenspeichern von vorzugsweise zumindest teilweise entladenen Spülkörben 2.

Hierbei bietet es sich an, dass das Entladesystem 1 eine Transfervorrichtung aufweist, welche ausgebildet ist, von dem Entladebereich 23 der Spülmaschine 20 Spülkörbe 2 der Spülkorbspeichervorrichtung 11 zuzuführen.

Kurz zusammengefasst betrifft die Erfindung somit insbesondere gewerbliche Spülmaschinen 20, wie beispielsweise Hauben- oder Korbtransportspülmaschinen, zum Spülen von unterschiedlichen Spülgütern in dafür vorgesehenen Spülkörben 2. Dabei ist insbesondere vorgesehen, dass die Spülmaschine 20 mit einer automatischen Entladevorrichtung (Entladesystem 1) zum automatischen Entladen des sauberen Spülguts 3 aus den Spülkörben 2 ausgestattet ist.

Dem Entladesystem 1 ist eine dedizierte Abstellvorrichtung 6 oder Aufstapelvorrichtung zugeordnet, um das entladene Spülgut 3 automatisch platzsparend sortenrein aufzustapeln.

Denkbar in diesem Zusammenhang ist, dass die Abstellvorrichtung 6 über mindestens ein und vorzugsweise mehrere Aufnahmebereiche 7, 8, wie beispielsweise Fächer, Magazine oder Schubladen, verfügt, in denen das gereinigte Spülgat sortenrein aufgestapelt werden kann.

Insbesondere kommt hierzu eine als Revolversystem ausgeführte Spülgutaufnahme 10 mit mehreren Magazinschächten zum Einsatz.

### Bezugszeichenliste

- 1: Entladesystem
- 2: Spülkorb
- 3: Spülgut/Spülgutteil
- 4: Roboterarmmechanismus
- 5: Greifer
- 6: Abstellvorrichtung
- 7: erster Aufnahmebereich/erster Magazinschacht
- 8: zweiter Aufnahmebereich/zweiter Magazinschacht
- 9: Übergabebereich
- 10: als Revolversystem ausgeführte Spülgutaufnahme
- 11: Spülkorbspeichervorrichtung

- 20: Spülmaschine
- 21: Behandlungskammer/Behandlungszone
- 22: Zulaufbereich/Zulaufseite
- 23: Auslaufbereich/Entladebereich/Auslaufseite
- 24: Haube/Tür

## Patentansprüche

1. Entladesystem (1) zum automatischen Entladen von in einer insbesondere gewerblichen Spülmaschine (20) gereinigtem Spülgut (3) aus Spülkörben (2) oder zum automatischen Entladen von in einer insbesondere gewerblichen Spülmaschine (20) gereinigtem Spülgut (3) aus Transportbandfächern einer Transportvorrichtung, wobei das Entladesystem (1) Folgendes aufweist:
- einen Roboterarmmechanismus (4) mit mindestens einem Greifer (5), welcher ausgebildet ist, mindestens ein Spülgutteil aus einem Spülkorb (2) oder aus einem Transportbandfach zu greifen;
- eine Abstellvorrichtung (6) mit einem einer ersten Spülgutart oder Spülgutsorte zugeordneten ersten Aufnahmebereich (7) und mit mindestens einem mindestens einer zweiten Spülgutart oder Spülgutsorte zugeordneten zweiten Aufnahmebereich (8),
- eine insbesondere berührungslos arbeitende Spülgut-Detektionsvorrichtung, welche ausgebildet ist, ein mit dem Greifer (5) des Roboterarmmechanismus (4) zu greifendes Spülgutteil (3) zu erfassen, und welche ferner ausgebildet ist, die Spülgutart oder Spülgutsorte des mit dem Greifer (5) des Roboterarmmechanismus (4) zu greifenden Spülgutteils (3) und/oder die Spülgutart oder Spülgutsorte des mit dem Greifer (5) des Roboterarmmechanismus (4) gegriffenen Spülgutteils (3) zu erfassen; und
- eine Steuereinrichtung, welche ausgebildet ist, den Roboterarmmechanismus (4) mit dem Greifer (5) derart anzusteuern, dass mit dem Greifer (5) das von der Spülgut-Detektionsvorrichtung erfasste Spülgutteil (3) gegriffen wird, und abhängig von der erfassten Spülgutart oder Spülgutsorte die Abstellvorrichtung (6) derart anzusteuern, dass der der erfassten Spülgutart oder Spülgutsorte entsprechend zugeordnete Aufnahmebereich (7, 8) der Abstellvorrichtung (6) in oder zu dem Übergabebereich (9) bewegt wird oder in dem Übergabebereich (9) vorliegt,
wobei der Roboterarmmechanismus (4) ausgebildet ist, das mit dem Greifer (5) gegriffene mindestens eine Spülgutteil (3) zu einem oder in einen Übergabebereich (9) zu transportieren, und wobei die Abstellvorrichtung (6) ausgebildet ist, abhängig von der Spülgutart oder Spülgutsorte des mit dem Greifer (5) gegriffenen mindestens einen Spülgutteils (3) entweder den ersten Aufnahmebereich (7) oder den mindestens einen zweiten Aufnahmebereich (8) derart zu dem oder in den Übergabebereich (9) zu bewegen, dass das mit dem Greifer (5) gegriffene mindestens eine Spülgutteil (3) in den entsprechenden Aufnahmebereich (7, 8) der Abstellvorrichtung (6) vorzugsweise sortenrein ablegbar ist,
**dadurch gekennzeichnet, dass**
die Abstellvorrichtung (6) eine als Linearsystem ausgeführte Spülgutaufnahme (10) mit einem ersten als Schublade ausgeführten Fach und mit mindestens einem zweiten als Schublade ausgeführten Fach aufweist, wobei das erste Fach dem ersten Aufnahmebereich (7) und das mindestens eine zweite Fach dem mindestens einen zweiten Aufnahmebereich (8) entspricht, und wobei bedarfsweise das erste Fach oder das mindestens eine zweite Fach derart linear bewegbar ist, dass eine Eingabeöffnung des entsprechenden Fachs in dem Übergabebereich (9) vorliegt.

2. Entladesystem (1) nach Anspruch 1,
wobei sich die erste Spülgutart oder Spülgutsorte von der mindestens einen zweiten Spülgutart oder Spülgutsorte in der Größe und/oder Formgebung des Spülgutteils (3) und/oder in dem Material des Spülgutteils (3) unterscheidet; und/oder wobei die Spülgutart oder Spülgutsorte Trinkgläser oder Schälchen oder Tassen oder Teller oder Untertassen oder Tabletts oder Besteck umfasst.

3. Entladesystem (1) nach einem der vorhergehenden Ansprüche,
wobei die Abstellvorrichtung (6) als ein mobiles System ausgeführt ist und bedarfsweise insbesondere manuell zu einem Entladebereich oder Auslaufbereich (23) der Spülmaschine (20) bewegt werden kann.

4. Entladesystem (1) nach einem der vorhergehenden Ansprüche,
wobei der Roboterarmmechanismus (4) einen Revolverkopf zur Halterung von unterschiedlichen Greifern aufweist; und/oder wobei der Roboterarmmechanismus (4) ausgebildet ist, unterschiedliche Greifer (5) zu tragen.

5. Spülmaschine (20), insbesondere gewerbliche Spülmaschine (20), welche als Transportspülmaschine oder als Haubenspülmaschine ausgeführt ist und einen Entladebereich (23) sowie ein Entladesystem (1) im oder beim Entladebereich (23) aufweist, wobei das Entladesystem (1) ein Entladesystem (1) nach einem der Ansprüche 1 bis 4 ist, wobei das Entladesystem (1) insbesondere als ein modulares System ausgeführt ist.

6. Verfahren zum automatischen Entladen von in einer insbesondere gewerblichen Spülmaschine (20) gereinigtem Spülgut (3) aus Spülkörben (2) oder zum automatischen Entladen von in einer insbesondere gewerblichen Spülmaschine (20) gereinigtem Spülgut (3) aus Transportbandfächern einer Transportvorrichtung, wobei das Verfahren folgende Verfahrensschritte aufweist:
- Bereitstellen eines Entladesystems (1) nach einem der Ansprüche 1 bis 4;
- Greifen von mindestens einem Spülgutteil (3) mit Hilfe des mindestens einen Greifers (5) des Roboterarmmechanismus (4);
- Transportieren des gegriffenen Spülgutteils (3) zu einem Übergabebereich (9); und
- Ablegen des Spülgutteils (3) in einen entsprechenden Aufnahmebereich (7, 8) der Abstellvorrichtung (6).

## Claims

1. An unloading system (1) for automatically unloading washware (3) cleaned in, in particular, a commercial warewasher (20) from washing baskets (2), or for automatically unloading washware (3) cleaned in, in particular, a commercial warewasher (20) from conveyor belt compartments of a conveyor apparatus, wherein the unloading system (1) comprises:
- a robotic arm mechanism (4) comprising at least one gripper (5), which is configured to grip at least one piece of washware from a washing basket (2) or from a conveyor belt compartment;
- a shelving apparatus (6) comprising a first receiving area (7) assigned to a first type or variety of washware, and at least one second receiving area (8) assigned to at least one second type or variety of washware,
- a washware detection apparatus, in particular a non-contact washware detection apparatus, which is configured to detect a piece of washware (3) to be gripped by the gripper (5) of the robotic arm mechanism (4), and which is further configured to detect the type or variety of washware of the piece of washware (3) to be gripped by the gripper (5) of the robotic arm mechanism (4) and/or the type or variety of washware of the piece of washware (3) gripped by the gripper (5) of the robotic arm mechanism (4); and
- a control device, which is configured to control the robotic arm mechanism (4) having the gripper (5) such that the piece of washware (3) detected by the washware detection apparatus is gripped by the gripper (5), and to control the shelving apparatus (6), depending on the detected type or variety of washware, such that the receiving area (7, 8) of the shelving apparatus (6) assigned to the detected type or variety of washware is moved into or to the transfer area (9), or is positioned in the transfer area (9),
wherein the robotic arm mechanism (4) is configured to transport the at least one piece of washware (3) gripped by the gripper (5) to or into a transfer area (9), and wherein the shelving apparatus (6) is configured, depending on the type or variety of washware of the at least one piece of washware (3) gripped by the gripper (5), to move either the first receiving area (7) or the at least one second receiving area (8) to or into the transfer area (9) such that the at least one piece of washware (3) gripped by the gripper (5) is depositable, preferably sorted by type, in the corresponding receiving area (7, 8) of the shelving apparatus (6),
**characterized in that**
the shelving apparatus (6) comprises a washware receptacle (10) configured as a linear system, having a first compartment configured as a drawer and at least one second compartment configured as a drawer, wherein the first compartment corresponds to the first receiving area (7), and the at least one second compartment corresponds to the at least one second receiving area (8), and wherein, as required, the first compartment or the at least one second compartment is linearly movable such that an insertion opening of the corresponding compartment is positioned in the transfer area (9).

2. The unloading system (1) according to claim 1,
wherein the first type or variety of washware differs from the at least one second type or variety of washware in terms of the size and/or shape of the piece of washware (3) and/or the material of the piece of washware (3); and/or wherein the type or variety of washware comprises drinking glasses, bowls, cups, plates, saucers, trays, or cutlery.

3. The unloading system (1) according to one of the preceding claims,
wherein the shelving apparatus (6) is configured as a mobile system and is movable, as required, in particular manually, to an unloading area or a discharge area (23) of the warewasher (20).

4. The unloading system (1) according to one of the preceding claims,
wherein the robotic arm mechanism (4) comprises a turret head for holding different grippers; and/or wherein the robotic arm mechanism (4) is configured to carry different grippers (5).

5. A warewasher (20), in particular a commercial warewasher (20), configured as a conveyor warewasher or hood-type warewasher and comprising an unloading area (23) and an unloading system (1) in or adjacent to the unloading area (23), wherein the unloading system (1) is an unloading system (1) according to one of claims 1 to 4, and wherein the unloading system (1) is configured as, in particular, a modular system.

6. A method for automatically unloading washware (3) cleaned in, in particular, a commercial warewasher (20) from washing baskets (2), or for automatically unloading washware (3) cleaned in, in particular, a commercial warewasher (20) from conveyor belt compartments of a conveyor apparatus, wherein the method comprises the following method steps:
- providing an unloading system (1) according to one of claims 1 to 4;
- gripping at least one piece of washware (3) with the aid of the at least one gripper (5) of the robotic arm mechanism (4);
- conveying the gripped piece of washware (3) to a transfer area (9); and
- depositing the piece of washware (3) into an appropriate receiving area (7, 8) of the shelving apparatus (6).

## Revendications

1. Système de déchargement (1) permettant de décharger automatiquement des articles de vaisselle (3) nettoyés dans, en particulier, un lave-vaisselle commercial (20) à partir de paniers de lavage (2), ou de décharger automatiquement des articles de vaisselle (3) nettoyés dans, en particulier, un lave-vaisselle commercial (20) à partir de compartiments à bande transporteuse d'un appareil de transport, le système de déchargement (1) comprend :
- un mécanisme de bras robotique (4) comprenant au moins un dispositif de préhension (5), qui est configuré pour saisir au moins une pièce d'article de vaisselle à partir d'un panier de lavage (2) ou à partir d'un compartiment à bande transporteuse ;
- un appareil de rayonnage (6) comprenant une première zone de réception (7) affectée à un premier type ou à une première variété d'article de vaisselle, et au moins une deuxième zone de réception (8) affectée à au moins un deuxième type ou une deuxième variété d'article de vaisselle,
- un appareil de détection d'article de vaisselle, en particulier un appareil de détection d'article de vaisselle sans contact, qui est configuré pour détecter une pièce d'article de vaisselle (3) devant être saisie par le dispositif de préhension (5) du mécanisme de bras robotique (4), et qui est en outre configuré pour détecter le type ou la variété d'article de vaisselle de la pièce d'article de vaisselle (3) devant être saisie par le dispositif de préhension (5) du mécanisme de bras robotique (4) et/ou le type ou la variété d'article de vaisselle de la pièce d'article de vaisselle (3) saisie par le dispositif de préhension (5) du mécanisme de bras robotique (4) ; et
- un dispositif de commande, qui est configuré pour commander le mécanisme de bras robotique (4) ayant le dispositif de préhension (5) de telle sorte que la pièce d'article de vaisselle (3) détectée par l'appareil de détection d'article de vaisselle est saisie par le dispositif de préhension (5), et pour commander l'appareil de rayonnage (6), en fonction du type ou de la variété d'article de vaisselle détecté, de telle sorte que la zone de réception (7, 8) de l'appareil de rayonnage (6) affectée au type ou à la variété d'article de vaisselle détecté est déplacée jusque dans ou vers la zone de transfert (9), ou est positionnée dans la zone de transfert (9),
dans lequel le mécanisme de bras robotique (4) est configuré pour transporter l'au moins une pièce d'article de vaisselle (3) saisie par le dispositif de préhension (5) vers ou jusque dans une zone de transfert (9), et dans lequel l'appareil de rayonnage (6) est configuré, en fonction du type ou de la variété d'article de vaisselle de l'au moins une pièce d'article de vaisselle (3) saisie par le dispositif de préhension (5), pour déplacer soit la première zone de réception (7) soit l'au moins une deuxième zone de réception (8) vers ou jusque dans la zone de transfert (9), de telle sorte que l'au moins une pièce d'article de vaisselle (3) saisie par le dispositif de préhension (5) peut être déposée, de préférence trié par type, dans la zone de réception (7, 8) correspondante de l'appareil de rayonnage (6),
**caractérisé en ce que**
l'appareil de rayonnage (6) comprend un réceptacle d'articles de vaisselle (10) configuré en tant que système linéaire, ayant un premier compartiment configuré en tant que tiroir et au moins un deuxième compartiment configuré en tant que tiroir, dans lequel le premier compartiment correspond à la première zone de réception (7), et dans lequel l'au moins un deuxième compartiment correspond à l'au moins une deuxième zone de réception (8), et dans lequel, si nécessaire, le premier compartiment ou l'au moins un deuxième compartiment est mobile linéairement de telle sorte qu'une ouverture d'insertion du compartiment correspondant est positionnée dans la zone de transfert (9).

2. Système de déchargement (1) selon la revendication 1,
dans lequel le premier type ou la première variété d'article de vaisselle diffère de l'au moins un deuxième type ou de l'au moins une deuxième variété d'article de vaisselle en termes de taille et/ou de forme de la pièce d'article de vaisselle (3) et/ou du matériau de la pièce d'article de vaisselle (3) ; et/ou dans lequel le type ou la variété d'article de vaisselle comprend des verres à boire, des bols, des tasses, des assiettes, des soucoupes, des plateaux ou des couverts.

3. Système de déchargement (1) selon l'une des revendications précédentes,
dans lequel l'appareil de rayonnage (6) est configuré comme un système mobile et est déplaçable, selon la nécessité, en particulier manuellement, vers une zone de déchargement ou une zone de décharge (23) du lave-vaisselle (20).

4. Système de déchargement (1) selon l'une des revendications précédentes,
dans lequel le mécanisme de bras robotique (4) comprend une tête à encoches pour maintenir différents dispositifs de préhension ; et/ou dans lequel le mécanisme de bras robotique (4) est configuré pour porter différents dispositifs de préhension (5).

5. Lave-vaisselle (20), en particulier un lave-vaisselle commercial (20), configuré comme un lave-vaisselle à convoyeur ou un lave-vaisselle à capot et comprenant une zone de déchargement (23) et un système de déchargement (1) dans ou adjacent à la zone de déchargement (23), dans lequel le système de déchargement (1) est un système de déchargement (1) selon l'une des revendications 1 à 4, et dans lequel le système de déchargement (1) est configuré, en particulier, comme un système modulaire.

6. Procédé de déchargement automatique d'articles de vaisselle (3) nettoyés dans, en particulier, un lave-vaisselle commercial (20) à partir de paniers de lavage (2), ou de déchargement automatique d'articles de vaisselle (3) nettoyés dans, en particulier, un lave-vaisselle commercial (20) à partir de compartiments à bande transporteuse d'un appareil de transport, dans lequel le procédé comprend les étapes de procédé suivantes :
- la fourniture d'un système de déchargement (1) selon l'une des revendications 1 à 4 ;
- la préhension d'au moins une pièce d'article de vaisselle (3) à l'aide de l'au moins un dispositif de préhension (5) du mécanisme de bras robotique (4) ;
- le transport de la pièce d'article de vaisselle (3) saisie vers une zone de transfert (9) ; et
- le dépôt de la pièce d'article de vaisselle (3) dans une zone de réception (7, 8) appropriée de l'appareil de rayonnage (6).
